# EUROPÄISCHE PATENTANMELDUNG

(11) **EP 1 571 521 A1**
(43) Veröffentlichungstag der Anmeldung: **07.09.2005**
(21) Anmeldenummer: 04004627.8
(22) Anmeldetag: 01.03.2004
(51) Int. Cl.: G06F 1/00

(54) **Einrichtung zum Schutz vor unberechtigter Benutzung einer Software**

(71) Anmelder: Renner, Peter, 51515 Kürten (DE)
(72) Erfinder: Renner, Peter, 51515 Kürten (DE)
(74) Vertreter: Nau, Walter

(57) **Zusammenfassung**

Einrichtung zum Schutz vor unberechtigter Benutzung einer Software und zur Vergabe von Zugangsrechten für befugte Personen zur Bedienung der Software, insbesondere für die Automatisierung und Prozessüberwachung, mit einem an eine Computerschnittstelle (Port 8, 10, 12) anschließbaren, vorzugsweise externer Speicher (Speicherstecker 9,11,13), der mit einem Code versehen ist, sodass sein Inhalt nicht durch unberechtigte Personen ausgelesen werden kann, wobei zwei von einander unabhängige Speicherbereiche vorgesehen sind, die beide unabhängig voneinander verschlüsselbar sind.

## Beschreibung

Die Erfindung bezieht sich auf eine Einrichtung zum Schutz vor unberechtigter Benutzung einer Software und zur Vergabe von Zugangsrechten für befugte Personen zur Bedienung der Software, insbesondere für die Automatisierung und Prozessüberwachung, mit einem an eine Computerschnittstelle anschließbaren, vorzugsweise externen Speicher, der mit einem Code versehen ist, sodass sein Inhalt nicht durch unberechtigte Personen ausgelesen werden kann

Eine gattungsgemäße Einrichtung ist allgemein bekannt.

Insbesondere bei Anwendungen, in denen eine Software Teil einer umfassenden Automatisierungs-, und Prozessüberwachungseinrichtung ist, in denen durch das Personal sehr verantwortliche Bedienungsaufgaben wahrgenommen werden, besteht das Bedürfnis, sicherzustellen, dass nur berechtigte Personen die Einrichtungen bedienen dürfen. Bei solchen Prozess-Kontrollsystemen, sind häufig mehrere Computer miteinander vernetzt, an denen Bedien- und Beobachtungsaufgaben wahrgenommen werden.

Aufgabe der Erfindung ist es, eine Einrichtung zur Verfügung zu stellen, durch die einfacher und sicherer der Nachweis geführt werden kann, wer, zu welchem Zeitpunkt, welche verantwortlichen Tätigkeiten an technologischen Prozessen wahrgenommen hat, wobei die Registrierung automatisch erfolgen soll. Es soll auch ein indirekter Kopierschutz zur Verfügung gestellt werden, der eine unberechtigte Benutzung ausschließt.

Diese Aufgabe wird erfindungsgemäß dadurch gelöst, dass zwei voneinander unabhängige Speicherbereiche vorgesehen sind, die beide unabhängig voneinander verschlüsselt werden können.

Bei einer Einrichtung, die über zwei unabhängige Speicherbereiche verfügt, erreicht man, dass der eine Speicherbereich durch den Lizenzgeber codiert werden kann und der andere Speicherbereich durch den Lizenznehmer. Somit ist ein Zusammenspiel zwischen Lizenznehmer und Lizenzgeber über die gleiche Einrichtung gegeben. Das Interesse des Lizenzgebers ist es, die unbefugte Benutzung der Software zu unterbinden. Das Interesse des Lizenznehmers ist es, nur befugte Personen mit der Bedienung der Software zu betrauen. Dies ist besonders dann von sehr großem Vorteil, wenn die Software Maschinen und Anlagen steuert und überwacht, so dass durch unsachgemäße Bedienung großer Schaden angerichtet werden kann.

Des weiteren wird dies dadurch erreicht, dass der eine Speicherbereich eine Signatur besitzt, die mit einer Signatur der schützenden Software übereinstimmt und der andere Speicherbereich eine andere Signatur besitzt, die mit einer weiteren Signatur der zu schützenden Software übereinstimmt. Dadurch stehen zwei unabhängig voneinander wirkende Schutzeinrichtungen in einem externen Gerät, Speicherstecker genannt, zur Verfügung, die jeweils voneinander unabhängige Schutzaufgaben erledigen. Dadurch kann ein Lizenzgeber und ein Lizenznehmer ihre jeweiligen Schutzaufgaben vorsehen. Diese sind so gestaltet, dass der eine Speicherbereich zur Sicherung der Lizenzrechte dient und der andere Speicherbereich nur befugten Personen die Bedienung der Software ermöglicht. Somit wird der Lizenzgeber seinen Speicherbereich kontrollieren und der Lizenznehmer den anderen Speicherbereich.

Ein besondere Schwierigkeit ist die Sicherung einer Software in Datennetzen. Lizenzgeber bieten Software häufig zu einem Grundpreis an und verlangen für die weiteren Arbeitsplätze jeweils einen Betrag der niedriger ist, als der Grundpreis. Zusätzlich besteht die Schwierigkeit, dass in unternehmensweiten Datennetzen Insellösungen existieren, die unabhängig voneinander geschützt werden müssen. Zum Beispiel existieren in einem Chemieunternehmen chemische Produktionsanlagen nebeneinander, die prinzipiell unabhängig sind. Jede einzelne Anlage wird durch mehrere vemetzte Computer überwacht. Erfindungsgemäß wird einer der externen Speicher als Hauptspeicher verschlüsselt und andere Speicher als Subspeicher, wobei die Software auf den Computern, die mit Subspeichern ausgerüstet sind, nur noch begrenzte Zeit lauffähig ist, wenn der Hauptspeicher von der Schnittstelle entfernt wird und/oder die Software auf diesem Computer nicht in Betrieb ist. Somit kommuniziert der Hauptspeicher mit den Subspeichern unter aktiver Unterstützung der Software, in dem die PCs, in denen Subspeicher stecken, in Zeitabständen prüfen, ob sich auf einem der Arbeitsplätze ein externer Hauptspeicher befindet. Wenn ein solcher Hauptspeicher nicht ansprechbar ist, werden die Subspeicher nach einer festlegbaren Zeit, die Stunden oder Tage betragen kann, die jeweilige Software so beeinflussen, dass sie sich selbsttätig beendet.

Die Erfindung ermöglicht dem Anwender unterschiedliche Modi, um unbefugte Personen von der Bedienung auszuschließen.

Der Anwender kann einen Subspeicher einer Person zuordnen. Die befugte Person ist für seinen Subspeicher, der als Stecker ausgeführt werden kann, verantwortlich und wird bei Arbeitsbeginn diesen Speicher in den Computer einstecken. Die Software prüft die Daten des externen Speichers und registriert den Namen des Bedieners und den Zeitbereich der Bedienung. Bei Arbeitsende wird der externe Speicher durch die befugte Person abgezogen.

Der andere Modus benutzt Passworte gespeichert im Subspeicher, die den befugten Personen zugeordnet sind. Bei Arbeitsbeginn wird die Person aufgefordert das Passwort einzugeben, das durch die Software kontrolliert und die Bedienung freigegeben wird. Bei Arbeitsende wird sich die Person abmelden, sodass Daten und Bedienungs-Zeitraum registriert werden können.

Zur weiteren Erläuterung der Erfindung wird auf die Abbildung verwiesen, in der ein Ausführungsbeispiel vereinfacht dargestellt ist.

Es zeigt:

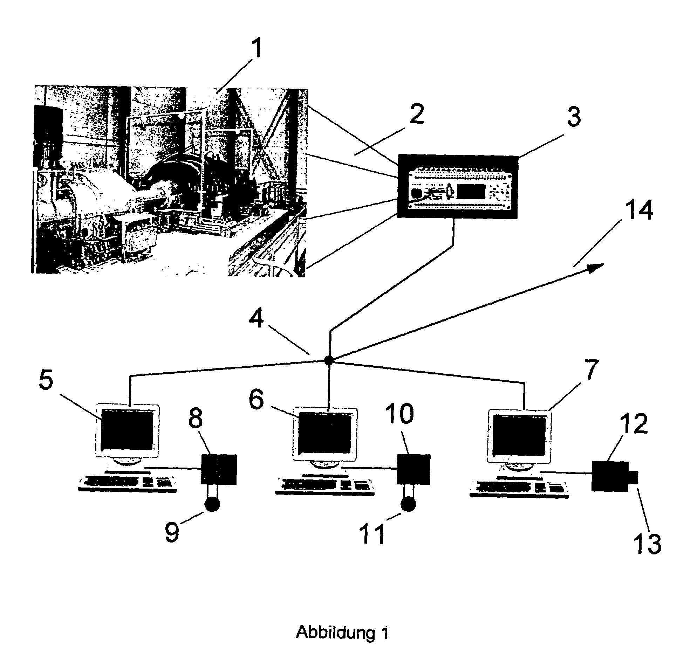

**Abbildung 1** eine schematische Darstellung einer Prozessüberwachung, die durch drei vernetzte Computer in Verbindung mit einer Mess- und Steuereinheit realisiert wurde.

In Abbildung 1 sind bezeichnet mit
- 1: ein zu überwachender Prozess, der als Verdichtereinheit ausgebildet ist, mit
- 2: Leitungen als Verbindungen zwischen Sensoren und Aktoren der Verdichtereinheit und einer Mess- und Steuereinheit ,mit
- 3: eine Mess- und Steuereinheit, mit
- 4: ein Netzwerk, das die Mess- und Steuereinheit mit Computern verbindet, mit
- 5, 6, 7: Computern, die als Ein- Ausgabegeräte der Prozessüberwachung dienen, mit
- 8, 10, 12: Ports der Computerschnittstellen, in die Sub-Speicherstecker und ein Haupt-Speicherstecker eingesteckt sind, mit
- 9, 11: Sub-Speicherstecker, mit.
- 13: einen Haupt- Speicherstecker und mit
- 14: eine Netzwerkverbindung zu weiteren Prozessen, zu einem weiteren Firmennetzwerk, zu Unternehmensdatenbanken und zur Datenbank des Lizenzgebers.

Die Funktion entsprechend Abbildung 1 ist folgende:

Die Verdichtereinheit 1 zeigt einen Verdichter, der durch einen Elektromotor angetriebenen wird. Aufgabe der Verdichtereinheit 1 ist es große Luftmengen zu Verdichten. Sie wirkt als Subsystem einer größeren Industrieanlage. Die Mess- und Steuereinheit 3 ist über Leitungen 2 mit den Sensoren und Aktoren der Verdichtereinheit 1 verbunden. Mittels der Leitungen erhält die Prozessüberwachung von den Sensoren ständig Informationen über den Zustand der Verdichtereinheit 1. Mit den Aktoren kann automatisch oder durch Eingaben des Bedienungspersonal die Arbeitsweise des Prozesses gesteuert werden.

Die Mess- und Steuereinheit 3 steuert die Verdichtereinheit 1, wodurch ein automatischer Betrieb gewährleistet wird. Eine weitere Aufgabe der Mess- und Steuereinheit 3 ist die Kommunikation mit den Computern 5, 6, 7 über das Datennetz 4 wodurch Bedienbefehle, die via Tastatur und Mouse der Computer 5, 6, 7 eingegeben werden, die Verdichtereinheit 1 steuern. Des Weiteren können die Computer 5, 6, 7 Daten von der Mess- und Steuereinheit 3 anfordern, die dem Bedienpersonal Informationen über den laufenden Prozess liefern. Diese Daten werden via die Leitungen 2 von der Verdichtereinheit 1 angefordert.

Die Computer 5, 6, 7 dienen zum Bedienen und Beobachten der Verdichtereinheit 1 sowie möglicherweise weiterer Prozesse, die über die Netzwerkverbindung 14 mit den Computern 5, 6, 7 kommunizieren können und dadurch durch die Computer 5, 6, 7 ebenfalls bedient werden können.

Auf den drei Computern 5, 6, 7 laufen unterschiedliche Programme, die von unterschiedlich ausgebildeten Personenkreisen bedient werden.

Der Computer 5 dient zum Bedienen und Beobachten der Verdichtereinheit 1. Dieser Personenkreis wird als Operator bezeichnet. Der Computer 6 wird von Servicetechnikern bedient, die den Betriebszustand der Anlage beobachten können. Der Computer 7 wird von Ingenieuren benutzt, die Ursachenforschung betreiben.

Die Computer 5, 6, 7 sind mit je einem Port 8, 10, 12 ausgerüstet. Diese Ports beinhalten je zwei Buchsen mit den zugehörigen Schnittstellen für die Sub-Speicherstecker 9, 11 und einen Haupt-Speicherstecker 13. Man sieht, dass die Sub-Speicherstecker 9, 11 bei den Computern 5, 6 eingesteckt sind, dadurch können an diesen Computern Bedienhandlungen vorgenommen werden. Bei dem Computer 7 ist kein Sub-Speicherstecker eingesteckt. Somit können momentan keine Bedienhandlungen vorgenommen werden.

Die Sub-Speicherstecker 9, 11 sind den befugten Personen zugeordnet und damit personenbezogen. Die befugte Person ist verantwortlich, dass sein Speicherstecker nicht in fremde Hände gerät, wodurch möglicherweise unsachgemäße Bedienungen erfolgen könnten. Sobald eine befugte Person Bedienhandlungen vornehmen möchte, steckt sie den Speicherstecker in den Port des Computers, an dem sie arbeiten möchte.

Sobald dies geschehen ist, bemerkt die Software des Computers, dass ein neuer Speicherstecker eingesteckt wurde. Sie prüft nun, ob es ein für den Computer autorisierter Speicherstecker ist. Dadurch wird sichergestellt, dass zum Beispiel ein Servicetechniker, der nur den Computer 6 bedienen darf, keine Bedienhandlungen an den Computern 5, 7 vornehmen kann, da er dafür nicht autorisiert ist. Bei besonders kritischen Prozessen kann zusätzlich die Eingabe eines Passwortes, das ebenfalls personenbezogen ist, verlangt werden. Der Bedienungszeitraum mit Uhrzeit und Datum wird im Speicherstecker registriert und kann durch eine zentrale Instanz via Netzwerkverbindung 14 abgefragt werden. Dadurch kann der Nachweis erbracht werden, wer zu welcher Zeit, für welche Handlungen verantwortlich gewesen ist.

Die Kontrolle über die bedienungsbezogenen Daten, die in dem einen Speicherbereich abgelegt werden, hat das Unternehmen selbst, meist ausgeübt durch den verantwortlichen Chefingenieur. Dieser Speicherbereich ist verschlüsselt und nur die verantwortliche Person verfügt über den Schlüssel und kann die Kontrolle über den Inhalt des Speichers ausüben.

Der zweite Speicherbereich der Sub-Speicherstecker und des Hauptspeichersteckers 13 ist ebenfalls verschlüsselt. Dieser Schlüssel ist nur dem Lizenzgeber bekannt. Dieser Speicherbereich wird vom Lieferanten vor Auslieferung entsprechend codiert. Dadurch schützt sich der Lizenzgeber der Software vor unzulässiger Nutzung der Software.

Der Grund für das Vorhandensein des Hauptspeichers in Verbindung mit den Sub-Speichern ist durch die Preisgestaltung des Lizenzgebers gegeben, der eine Basislizenz und eine praktisch beliebige Zahl von Sublizenzen vergibt. Die Basislizenz wird durch den Haupt-Speicherstecker 13 geschützt. Die Sublizenzen durch die Sub- Speicherstecker 9, 11.

Der Haupt- Speicherstecker 13 muss zum Schutze der Lizenzrechte mindestens Daten enthalten, die Angaben beinhalten, welche Softwareprogramme zu schützen sind, und er muss über eine einmalig vorhandene Adresse verfügen. Weitere Daten bezüglich des Nutzers, der Version etc. sind möglich.

Die Sub-Speicherstecker 9 und 11 müssen mindestens Daten enthalten, die den Bezug zur Adresse des Haupt- Speicherstecker 13 gewährleisten, und sie müssen den Bezug zu der zu schützenden Software herstellen. Femer müssen sie Daten enthalten, die den Bezug zu den befugten Personen ermöglichen.

### Der Schutz sowohl der Nutzungsrechte als auch der Bedienrechte erfolgt durch ein Zusammenspiel der Softwareprogramme in Verbindung mit den Speichersteckern

Ein Softwareprogramm eines der drei Computer 5, 6, 7 wird zuerst prüfen, ob ein Haupt-Speicherstecker an seinem Computer angeschlossen ist. Ist dies der Fall, so prüft es, welche Programme dem Schutz unterliegen und erklärt sich zum Schutz-Server.

Weiterhin prüft das Softwareprogramm ob ein Sub-Speicherstecker angeschlossen ist. Ist dies der Fall prüft es, ob der eingesteckte Sub-Speicherstecker zum installierten Softwareprogramm passt. Danach wird die Adresse des Haupt-Speichersteckers abgefragt und verglichen.

Ist auch dies der Fall so wird die Software zur Benutzung freigegeben. Im nächsten Schritt wird die Person aus den Daten des Sub-Speichersteckers ermittelt und der Bedienzeitraum in den Subspeicher zurückgeschrieben.

Wenn eines der Softwareprogramme feststellt, dass ein Sub-Speicherstecker aber kein Hauptspeicherstecker angeschlossen ist, so prüft es in seinem Netzwerkbereich ob einer der Computer sich als Schutz-Server ausweist. Er prüft dessen Daten auf Übereinstimmung und gibt dann die Software frei. Findet er keinen Schutzserver, so gibt er die Bedienung für eine festlegbare Zeit frei. Dies ist notwendig, da die Funktion "Prozessüberwachung" Vorrang vor dem Softwareschutz genießt. Es ist aus betrieblichen Gründen nicht zumutbar, die Prozessüberwachung zu unterbinden, wenn der Computer mit dem Haupt-Steckerspeicher gerade nicht verfügbar ist.

## Patentansprüche

1. Einrichtung zum Schutz vor unberechtigter Benutzung einer Software und zur Vergabe von Zugangsrechten für befugte Personen zur Bedienung der Software, insbesondere für die Automatisierung und Prozessüberwachung, mit einem an eine Computerschnittstelle (Port 8, 10, 12) anschließbaren, vorzugsweise externen Speicher (Speicherstecker 9,11,13), der mit einem Code versehen ist, sodass sein Inhalt nicht durch unberechtigte Personen ausgelesen werden kann,
**dadurch gekennzeichnet, dass** zwei von einander unabhängige Speicherbereiche vorgesehen sind, die beide unabhängig voneinander verschlüsselbar sind.

2. Einrichtung zum Schutz vor unberechtigter Benutzung einer Software nach Anspruch 1,
**dadurch gekennzeichnet, dass** der eine Speicherbereich eine Signatur besitzt, die mit einer Signatur der schützenden Software übereinstimmt und der andere Speicherbereich eine andere Signatur besitzt, die mit einer weiteren Signatur der zu schützenden Software übereinstimmt.

3. Einrichtung zum Schutz vor unberechtigter Benutzung einer Software nach einem der Ansprüche 1 oder 2,
**dadurch gekennzeichnet, dass** der eine Speicherbereich zur Sicherung der Lizenzrechte dient und der andere Speicherbereich nur befugten Personen die Bedienung der Software ermöglicht.

4. Einrichtung zum Schutz vor unberechtigter Benutzung einer Software nach einem der vorhergehenden Ansprüche,
**dadurch gekennzeichnet, dass** in Datennetzen zum Schutz vor unberechtigter Benutzung der Software mindestens ein externer Speicher (Haupt-Speicherstecker 13) vorgesehen und als Hauptspeicher verschlüsselt ist und andere Speicher (Sub-Speicherstecker 9,11) vorgesehen und als Subspeicher verschlüsselt sind, wobei die Software auf den Computern, die mit Sub-Speichersteckern (9, 11) ausgerüstet sind, nur eine begrenzte Zeit lauffähig ist, wenn der Haupt-Speicherstecker (13) von seiner Computerschnittstelle (12) entfernt ist und/oder dieser Computer nicht in Betrieb ist.

5. Einrichtung zum Schutz vor unberechtigter Benutzung einer Software nach einem der vorhergehenden Ansprüche,
**dadurch gekennzeichnet, dass** jeweils ein Speicherstecker (9,11 oder 13) einer befugten Person zugeordnet ist, wobei der Speicher Daten der Person enthält und diese Person seine Aufgaben nur dann wahrnehmen kann, wenn der externe Speicher (Speicherstecker 9,11 oder 13) an der hierfür vorgesehenen Computerschnittstelle (Ports 8, 10 oder 12) angeschlossen ist

6. Einrichtung zum Schutz vor unberechtigter Benutzung einer Software nach einem der vorhergehenden Ansprüche,
**dadurch gekennzeichnet, dass** im externen Speicher (Speicherstecker 9,11 oder 13) Passworte vorgegeben sind, wobei ein durch eine Person eingegebenes Passwort damit verglichen wird und bei Übereinstimmung mit einem der gespeicherten Passworte die Software zur Benutzung freigegeben wird.

7. Einrichtung zum Schutz vor unberechtigter Benutzung einer Software nach einem der vorhergehenden Ansprüche,
**dadurch gekennzeichnet, dass** die im externen Speicher (Speicherstecker 9, 11 oder 13) Angaben gespeichert sind, die den befugten Personen nur den Zugang zu bestimmten Funktionen der zu schützenden Software ermöglichen.

8. Einrichtung zum Schutz vor unberechtigter Benutzung einer Software nach einem der vorhergehenden Ansprüche,
**dadurch gekennzeichnet, dass** im Zusammenspiel zwischen dem externen Speicher (Speicherstecker 9, 11 oder 13) und der Software eine Registrierung erfolgt, welcher Berechtigte zu welcher Zeit, welche Bedienaufgaben wahrgenommen hat.
